**Europäisches Patentamt**

**European Patent Office**

**Office européen des brevets**

(19)

(11) Veröffentlichungsnummer: **0 046 187**
**B1**

(12) # EUROPÄISCHE PATENTSCHRIFT

(45) Veröffentlichungstag der Patentschrift: **12.11.86**

(21) Anmeldenummer: **81105408.9**

(22) Anmeldetag: **11.07.81**

(51) Int. Cl.⁴: **B 65 H 51/20, H 02 K 49/06**

(54) Liefervorrichtung für laufende Fäden.

(30) Priorität: **19.08.80 DE 3031260**

(43) Veröffentlichungstag der Anmeldung:
**24.02.82 Patentblatt 82/08**

(45) Bekanntmachung des Hinweises auf die
Patenterteilung:
**12.11.86 Patentblatt 86/46**

(84) Benannte Vertragsstaaten:
**AT BE CH DE FR IT LI NL SE**

(56) Entgegenhaltungen:
**DE-A-1 760 658**
**DE-A-1 785 508**
**DE-A-2 651 857**
**DE-A-2 651 857**
**DE-B-1 243 264**
**FR-A-1 008 834**

Die Akte enthält technische Angaben, die nach
dem Eingang der Anmeldung eingereicht
wurden und die nicht in dieser Patentschrift
enthalten sind.

(73) Patentinhaber: **SOBREVIN Société de brevets
industriels-Etablissement
Aeule Strasse 151
FL-9490 Vaduz (LI)**

(72) Erfinder: **Bianchi, Massimiliano
Piazza Castello 5
Milano (IT)**
Erfinder: **Sarfati, Alberto Gustavo
Viale Cadorna 11
Busto Arsizio (IT)**
Erfinder: **Riva, Ermete
Via Lunga 36
Pagnana di Merate (IT)**

(74) Vertreter: **Rieder, Hans-Joachim, Dr.
Corneliusstrasse 45 Postfach 11 04 51
D-5600 Wuppertal 11 (DE)**

(56) Entgegenhaltungen:
**FR-A-2 439 249**
**GB-A-1 165 137**
**US-A-2 939 973**
**US-A-3 167 673**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Courier Press, Leamington Spa, England.

## Beschreibung

Die Erfindung betrifft eine Liefervorrichtung gemäß Gattungsbegriff des Hauptanspruches.

Bei den bekannten Lösungen dieser Art (DE—A—26 51 857) ist der Antrieb von einem an- und abschaltbaren Antriebsmotor als Dreiphasen-Drehfeldmotor gebildet und von einer logischen Steuer- und Speiseschaltung zur Umwandlung eines Gleichstromes in einen Dreiphasen-Strom variabler Frequenz gespiesen, wobei der erzeugte Drehstrom, veranlaßt durch die Abtasteinrichtung, ein-/ausschaltbar und seine Frequenz in Funktion der Zeit bei konstanter Stromstärke nach einem vorgegebenen Drehzahlverlauf des Antriebsmotors einstellbar ist. Diese Lösung vermeidet zwar eine sehr hohe Beschleunigungsbelastung des Fadens beim Anlauf und ein Rückdrehen des Antriebes beim Abstellen um einen bestimmten Teilwinkel, gewährleistet aber trotzdem keine optimalen Wickelbewegungen für den unter einer nicht unwesentlichen Vorspannung zulaufenden Faden, welche Vorspannung schon deshalb notwendig ist, damit der Faden durch Einzwängen an der kegelstumpfförmigen Schräge das Vorschieben aller vorher aufgewickelten Fadenwindungen auf der Trommel bis zur Arbeitsebene der Abtasteinrichtung vornehmen kann. Am Anfang und Ende der linearen Phase der Steuerspannung tritt jeweils doch ein Sprung im Beschleunigungsverlauf auf. Darüber hinaus ist die Einstellung auf den vorgegebenen Drehzahlverlauf des Antriebsmotors, insbesondere die einzustellende Maximaldrehzahl, welche mitbestimmend ist für die maximale Durchlaufleistung einer solchen Liefervorrichtung, schwierig und beeinflußt ihrerseits des Beschleunigungsverhalten, insbesondere in der Anlaufphase, welches Beschleunigungsverhalten zudem dann auch noch abhängig ist von den nicht erheblichen Trägheitsmomenten des Läufers solcher Motoren. Auch ist diese vorbekannte Einrichtung steuerungstechnisch relativ aufwendig.

Um insbesondere die Trägheitsmomente solcher Antriebsmotoren bei solchen Vorrichtungen auszuschalten, ist es darüber hinaus bekanntgeworden, den Antriebsdrehteil, d. h. den Läufer eines Antriebsmotors ständig durchlaufen zu lassen und eine Abtriebsachse vorzusehen, deren Drehung die Fadenaufwicklung bewirkt und diese Abtriebsachse an das Antriebsdrehteil anzukuppeln. Dies geschieht mit einer elektromagnetischen Reibungskupplung (DE—C—27 43 749). Neben einer gewissen Verschleißenfälligkeit besitzen diese Vorrichtungen den Nachteil, daß beim Ankuppeln eine erhebliche Belastung des vorgespannt zulaufenden Fadens auftritt, was in vielen Fällen zu einem Reißen des Fadens führt, insbesondere, wenn man den Antriebsmotor auf relativ hohen Tourenzahlen laufen läßt.

Aufgabe der vorliegenden Erfindung ist es, eine gattungsgemäße Liefervorrichtung so auszubilden, daß bei einfachem, verschleißfreiem und insbesondere auch steuerungstechnisch wenig aufwendigem Aufbau hohe Fadendurchlaufleistungen dadurch erzielt sind, daß die Anfangs- und End-Phasen des Fadenaufwickelns in optimaler Weise an die Fadenstärke, Fadenspannung und den Fadenbedarf anpaßbar sind.

Gelöst ist diese Aufgabe durch die im Kennzeichen des Hauptanspruches angegebene Erfindung. Die Unteransprüche stellen vorteilhafte Weiterbildungen heraus.

Zufolge dieser Ausgestaltung ist eine Liefervorrichtung für laufende Fäden verwirklicht, welche bei insbesondere montagetechnisch günstiger Ausgestaltung so hohe Fadendurchlaufgeschwindigkeiten zuläßt, daß sie den maximalen Abzugsgeschwindigkeiten von Hochleistungswebmaschinen relativ großer Breite gerecht wird. Es ist eine bestimmt gestaltete Wirbelstromkupplung, in günstiger Zuordnung zur Wirbelstrombremse beides mit sehr geringen Trägheitsmomenten ausgestattet, an einer entsprechenden gattungsgemäßen Liefervorrichtung vorgesehen und mit geringstmöglichem elektrotechnischem Aufwand gesteuert. Das ständig angetriebene Antriebs-Drehteil kann immer mit einer Geschwindigkeit umlaufen, die mindestens dem nur kurzzeitig auftretenden Maximalbedarf entspricht oder auch darüber liegt. Das Beschleunigungsverhalten bei Einkuppeln der Wirbelstromkupplung ist -wie gefunden wurdeso optimal, daß selbst dann kein Zerreißen des Fadens eintritt, auch wenn dieser möglichst schnell auf die notwendige, vornehmlich von der Geschwindigkeit des Abzuges bestimmten Aufwickelgeschwindigkeit gebracht wird. Dies geschieht regelbar über die Stromzufuhr zur Wirbelstromkupplung. Es ist dabei nicht zwingend, daß die Fadenaufwickelgeschwindigkeit, wie bspw. bei Reibschlußkupplungen, überhaupt die Drehzahl des Antriebsdrehteiles übernimmt.

An sich sind zusammengefaßte Wirbelstromkupplungs- plus Wirbelstrombrems-Einrichtungen bekannt, bei denen beides auch in einem Gehäuse untergebracht ist (FR—A—10 08 834). Diese sind auch dergestalt, daß ein angetriebenes Antriebsdrehteil und eine Abtriebsachse vorgesehen sind, wobei letztere einen Träger besitzt, der sich in zwei achsparallel gerichtete Ringe forsetzt, die je einen in Umfangsrichtung variierenden Spalt für die Magnetfeldlinien ortsfester Magneten aufweist, von denen der eine der Wirbelstromkupplung und der andere der Wirbelstrombremse zugeordnet ist, welche sich beide dadurch ergeben, daß die genannten Ringe in je einen Spalt eintauchen, welcher vom Magnetfeld der Wirbelstrombremse bzw. der Wirbelstromkupplung durchsetzt ist.

Darüber hinaus ist es bereits bekannt (DE—C—12 43 264), die Kombination eines Elektromotors mit einer Wirbelstromkupplung so vorzusehen, daß radial gezahnte Drehteile ineinandergeschachtelt sind. Die entsprechende Zahnung erhöht den Wirkungsgrad.

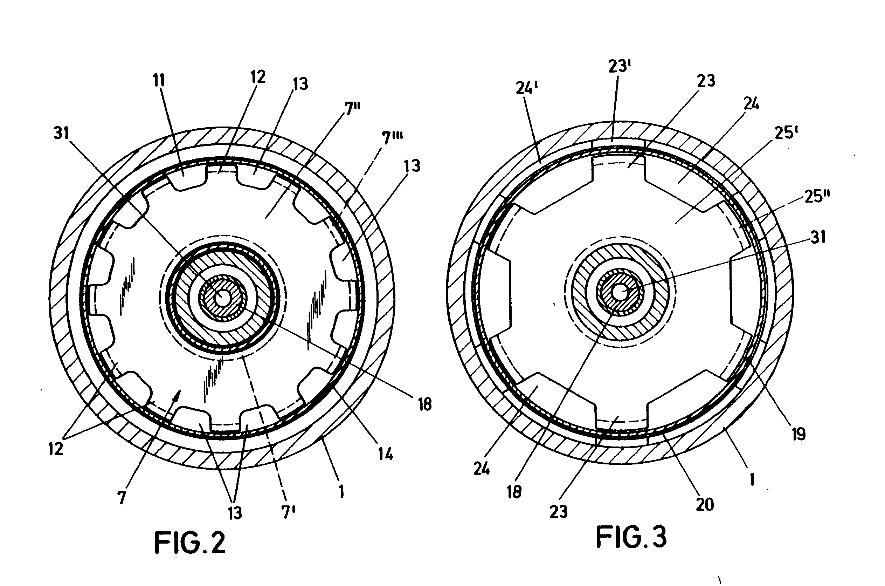

Nachstehend ist ein Ausführungsbeispiel anhand der Fig. 1 bis 4 erläutert. Es zeigt

Fig. 1 einen teilweisen Längsschnitt durch die Liefervorrichtung, welche einen stillstehenden Speicherkörper aufweist,

Fig. 2 den Schnitt nach der Linie II—II in Fig. 1 und

Fig. 3 den Schnitt nach der Linie III—III in Fig. 1.

Die Liefervorrichtung besitzt ein zylindrisches Gehäuse 1, welches in einem abgesetzten Gehäuseabschnitt 2 die Wälzlager 3 aufnimmt. In diesen sitzt eine eine Antriebsscheibe 4 tragende, hohl ausgebildete Antriebsachse 5.

Das innere Ende der Antriebsachse 5 ist mit dem radial gerichteten Topfboden 6 eines Antriebs-Drehteiles 7 verbunden. Dieses und ein feststehendes Gehäuseteil 8, welche Gehäuseteile aus Weicheisen bestehen, umgeben die stillstehende Wicklung 9 eines konzentrisch zur Antriebsachse 5 angeordneten Ringmagneten 10. Das feststehende Gehäuseteil 8 besitzt im Querschnitt U-Form derart, daß die Schenkel 8', 8" parallel zur Antriebsachse 5 verlaufen. Der von dem Schenkel 8" gebildete Teilabschnitt und der parallel dazu verlaufende Teilabschnitt 7' des Antriebsdrehteiles 7 überlappen sich unter Belassung eines schmalen Spalts. Der von dem Teilabschnitt 7' abgebogene, radial auswärts weisende Schenkel 7" weist eine in Richtung der Wicklung 9 weisende Abbiegung 7''' auf.

Zwischen dem feststehenden Gehäuseteil 8 und dem Antriebs-Drehteil 7 ist ein Spalt 11 vorgesehen derart, daß eine Variation der Spaltbreite durch Zähne 12 und Zahnlücken 13 am Umfangsrand des radial auswärts weisenden Schenkels 7" des Antriebsdrehteils 7 gebildet ist. In diesen Spalt 11 ragt ein aus elektrisch leitendem Material bestehender Ring 14. Für letzteren ist vorzugsweise Kupfer verwendet. Er sitzt an einem topfförmig gestalteten, aus Leichtmetall bestehenden Träger 15, der in das geometrisch ähnlich gestaltete Antriebsdrehteil 7 eingeschachtelt ist. Im Bereich seines Topfbodens 16 ist der Träger 15 an einem radial auswärts ragenden Flansch 17 mit der die Antriebsachse 5 durchsetzenden Abtriebsachse 18 verbunden.

An dem Träger 15 befindet sich entgegengesetzt zu dem achsparallel in den Spalt 11 hineinragenden Ring 14 ein zweiter aus elektrisch leitendem Material bestehender Ring 19. Dieser taucht in den Spalt 20 ein, der von dem feststehenden, aus Weicheisen bestehenden Gehäuse eines zweiten, konzentrisch zur Abtriebsachse 18 angeordneten Ringmagneten 22 gebildet ist. Auch dieser Spalt 20 besitzt eine in Umfangsrichtung variierende Spaltbreite, bestehend aus Zähnen 23 und Zahnlücken 24. Das feststehende Gehäuse ist ebenfalls zweiteilig ausgebildet derart, daß der radial auswärts weisende Schenkel 25' des einen Gehäuseteils 25 eine in Richtung der Ringmagnet-Wicklung 26 weisende Abbiegung 25" besitzt. Den Zähnen 23 und Zahnlücken 24 gegenüber liegen Zähne 23' und Zahnlücken 24' des anderen Gehäuseteils 21.

Die Abtriebsachse 18 sitzt ihrerseits in Wälzlagern 46 des Gehäuses 1. An ihrem dem Antrieb abgekehrten Ende ist die Abtriebsachse 18 stufenförmig abgesetzt und sitzt dort in Wälzlagern 27 eines Speicherkörpers 28. Der Aufbau des Speicherkörpers entspricht demjenigen der DE—PS— 2 417 440. Dem Speicherkörper 28 vorgeordnet ist ein Fadenösenträger 29, der auf der Abtriebsachse 18 aufgekeilt ist. Am den Speicherkörper 28 überragenden Ende befindet sich am Fadenösenträger die Fadenöse 30. Der auf den Speicherkörper 28 aufzubringende Faden durchsetzt eine Bohrung 31 der Abriebsachse 18 und gelangt von dort in eine Radialbohrung 32 des Fadenösenträgers 29, die in die Fadenöse 30 übergeht. Von der Fadenöse 30 kommend läuft der Faden auf eine kegelstumpfförmige Schräge 33 des Speicherkörpers 28 auf, welche Schräge sich in eine zylindrische Trommelwand fortsetzt. In dem Speicherkörper 28 sitzt längsverschieblich ein Träger 34. Zu seiner Längsverstellung dient eine zentrale Schraube 35. In dem Träger 34 sind spitzwinklig geneigt zur Achslinie der Speicherkörperachse, die mit der Antriebsachse und Antriebsachse fluchtet, Bohrungen zur Aufnahme von Rundstegen 36 in gleichmäßiger Winkelverteilung vorgesehen. Die Stege 36 durchsetzen entsprechende Schlitze 37 des Speicherkörpers 28 und liegen kreuzend zur Winkelkehle 38 des Speicherkörpers. Die Fadenlagen F gelangen daher vorerst auf die Schräge 33 und dann auf die Stege 36 und Mantelwand des Speicherkörpers. Letzterem ist ein ihn umgebender Bremsring 39 zugeordnet. Der Faden F verläßt die Liefervorrichtung durch eine Öse 40 der den Speicherkörper 28 konzentrisch umgebenden Tülle 41.

An dem Fadenösenträger 29 befindet sich ein radial vorstehender Sporn 42, dem ein Drehzahlmesser 43 zugeordnet ist.

Der Speicherkörper 28 weist eine durch einen Pfeil angedeutete Abtasteinrichtung 44 auf, die von den auf den Speicherkörper 28 aufgelaufenen Fadenwindungen F beeinflußt wird. Beispielsweise kann die Abtasteinrichtung 44 in Art einer Lichtschranke ausgebildet sein, die einen Schalter 45 steuert.

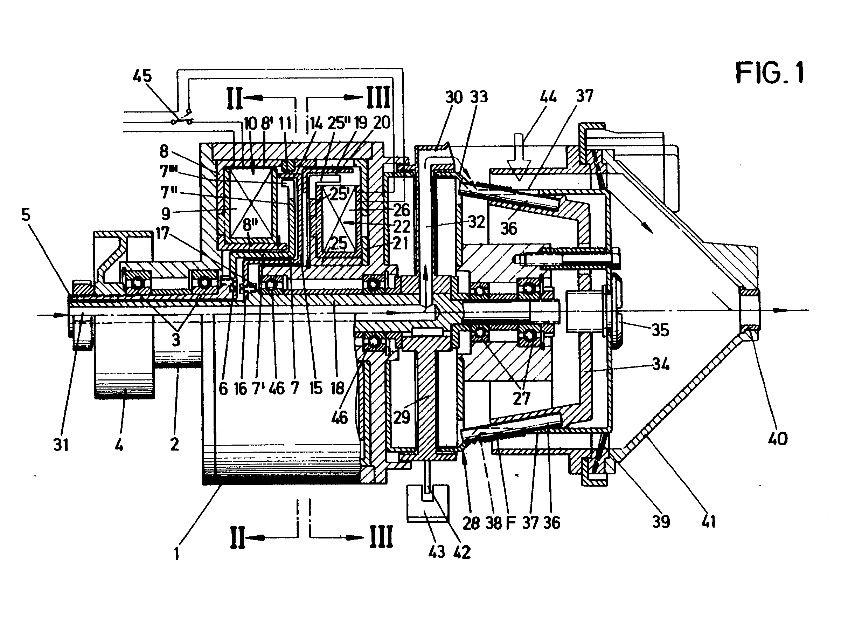

Es ergibt sich folgende Wirkungsweise: Solange die auf den Speicherkörper 28 aufgebrachten Fadenwindungen F die Abtasteinrichtung 44 nicht beeinflussen, befindet sich der Schalter 45 in der in Fig. 1 mit vollen Linien ausgezeichneten Lage. Daher erhält die Wicklung 9 des Ringmagneten 10 Spannung. Der in den Spalt 11 zwischen feststehendem Gehäuseteil 8 und durch die Antriebsachse 5 ständig angetriebenem Gehäuseteil 7 eintauchende Ring 14 wird dabei ohne mechanischen Kontakt mitgenommen, welcher Ring 14 über den Träger 15 die Abtriebsachse 18 in Umdrehung versetzt. Diese bewegt ihrerseits die Fadenöse 30 um den Speicherkörper 28 herum. Mittels des vom Sporn 42 des Fadenösenträgers gesteuerten Drehzahlmessers 43 kann die Stromzufuhr zum Ringmagneten 10 der Kupplungseinrichtung gesteuert werden. Erreicht die Anzahl der Fadenwindungen eine solche Größe, daß dadurch die Abtasteinrichtung 44 beeinflußt wird, steuert diese den Schalter 45 in die in Fig. 1 strichpunktiert dargestellte Lage. Die Wicklung 9 des Ringmagneten 10 erhält dann keine Spannung. Es wird dann die Wicklung 26 des Ringmagneten 22 der Bremseinrichtung erregt. Über den in den Spalt 20 des Gehäuses (Gehäuseteile 21 und 25) eintauchenden Ring 19 erfolgt dann die Verzögerung der Abtriebsachse 18. Nach Abzug von Fadenwindungen auf dem Speicherkörper erfolgt wiederum das Ankuppeln. Dieses ist sehr feinfühlig vornehmbar und erfolgt im schnellen Wechsel. Die Spaltbreite bestimmt dabei das in Umfangsrichtung liegende Wechselfeld.

Der Aufbau der dargestellten Ausführungsform, bei welcher der Speicherkörper stillsteht und sich ein Fadenführer dreht, kann auch umgekehrt sein, daß also der Fadenführer stillsteht und sich der Speicherkörper dreht. Letzterer sitzt dann auf der Abtriebsachse 18'.

**Patentansprüche**

1. Liefervorrichtung für laufende Fäden mit einem mehrere Fadenwindungen als abzuziehenden Vorrat aufnehmenden Speicherkörper (28), welchem der Faden tangential im Bereich einer kegelstumpfförmigen Schräge (33) mit gesteuerter Geschwindigkeit zugeführt und von welchem der Faden in Achsrichtung abgezogen wird und welchem eine Einrichtung zugeordnet ist zur Steuerung des Fadenzulaufs jeweils nur bis zum Erreichen einer bestimmten Anzahl von Fadenwindungen auf dem Speicherkörper, welche Steuerungs-Einrichtung eine von den Fadenwindungen des Speicherkörpers beeinflußte Abtasteinrichtung (44) und eine die Fadenzufuhr stoppende Wirbelstrom-Bremseinrichtung umfaßt, dadurch gekennzeichnet,

daß ein ständig angetriebenes Antriebs-Drehteil (7) vorgesehen ist, das über eine Wirbelstromkupplung mit einer durch ihre Drehung die Fadenaufwicklung bewirkenden Abtriebsachse (18) verbindbar ist, wobei die Wirbelstromkupplung, über deren Stromzufuhr die Steuerung der Fadengeschwindigkeit in Abhängigkeit von der Drehzahl der Abtriebsachse (18) erfolgt, und die Wirbelstrombremse derart ausgestaltet sind, daß

ein von der Abtriebsachse (18) ausgehender Träger (15) sich in zwei entgegengesetzt gerichtete achsparallele Ringe (14, 19) fortsetzt, die je in einen in Umfangsrichtung in der Breite variierenden Spalt (11) bzw. (20) für die Magnetfeldlinien eines ortsfesten Kupplungs-Ringmagneten (10) und einen ortsfesten Brems-Ringmagneten (22) eintauchen, wobei der zur Wirbelstromkupplung gehörige Spalt (11) zwischen ortsfestem Gehäuseteil (8) und dem Rand (7''') eines drehbaren, ständig mit dem Antriebs-Drehteil (7) verbundenen Gehäuseteiles (7'') gebildet ist, während der zweite Spalt (20) gebildet ist zwischen zwei ortsfesten Gehäuseteilen (21) und (25).

2. Liefervorrichtung nach Anspruch 1, dadurch gekennzeichnet, daß das drehende und das feststehende Gehäuseteil (7, 8) einander überlappend angeordnete Teilabschnitte (7', 8'') besitzen.

3. Liefervorrichtung nach Anspruch 1, dadurch gekennzeichnet, daß die Variation der Spaltbreite durch Zähne (12, 23) und Zahnlücken (13, 24) am Umfangsrand des radial auswärtsweisenden Schenkels (7'', 25) des einen Gehäuseteiles gebildet ist.

4. Liefervorrichtung nach Anspruch 1, dadurch gekennzeichnet, daß der Abtriebsachse (18) ein Drehzahlenmesser (43) zugeordnet ist, der die Stromzufuhr zum Kupplungs-Ringmagnetes (10) steuert.

5. Liefervorrichtung nach Anspruch 1, dadurch gekennzeichnet, daß der Träger (15) topfförmig gestaltet ist, in das geometrisch ähnliche gestalte drehende Gehäuseteil (7) eingeschachtelt ist und beide Teile im Bereich ihres Topfbodens (6) bzw. (16) die Achsverbindung besitzen.

6. Liefervorrichtung nach Anspruch 3, dadurch gekennzeichnet, daß die Zähne (12, 23) an ihrem freien Ende eine in Richtung der Ringmagnet-Wicklungen (9 bzw. 26) weisende Abbiegung (7''' bzw. 25'') besitzen.

**Revendications**

1. Dispositif délivreur de fils défilants, comportant un corps d'emmagasinage (28) recevant une pluralité de spires de fil en tant que réserve appelée à être dévidée, le fil étant amené à une vitesse contrôlée vers ce corps d'emmagasinage tangentiellement dans la zone d'une partie oblique (33) tronconique et en étant dévidé en direction axiale, cependant qu'un dispositif de commande de l'amenée du fil associé audit corps d'emmagasinage contrôle cette amenée de façon telle que seulement un nombre prédéterminé de spires de fil soient formées sur le corps d'emmagasinage, ledit dispositif de commande comprenant un dispositif détecteur (44) sensible aux spires de fil du corps d'emmagasinage, ainsi qu'un dispositif de freinage à courants de Foucault, caractérisé en ce qu'il est prévu un élément rotatif d'entraînement (7) entraîné de manière continue et susceptible d'être relié, par l'intermédiaire d'un accouplement à courants de Foucault, à un arbre de sortie (18) qui provoque l'enroulement du fil par sa rotation, cependant que l'accouplement à courants de Foucault dont l'alimentation en courant commande la vitesse du fil en fonction de la vitesse de rotation de l'arbre de sortie (18), d'une part, et le frein à courants de Foucault, d'autre part, présentent un agencement dans lequel un support (15) s'étendant à partir de l'axe de sortie (18) se prolonge par deux anneaux (14, 19) à axes parallèles, orientés dans des sens opposés, chacun de ces anneaux pénétrant dans un entrefer respectif (11 et 20) de largeur variable dans la direction périphérique, pour les lignes de force magnétiques d'un aimant annulaire stationnaire d'accouplement (10) et d'un aimant annulaire stationnaire de freinage (22), cependant que l'entrefer (11) associé à l'accouplement à courants de Foucault est formée entre une partie stationnaire de carter (8) et le bord (7''') d'une partie rotative de carter (7'') liée en permanence à l'élément rotatif d'entraînement (7), et que le second entrefer (20) est formé entre deux parties stationnaires de carter (21 et 25).

2. Dispositif délivreur selon la revendication 1, caractérisé en ce que les parties rotative et stationnaire de carter (7, 8) comportent des segments (7', 8") qui se recouvrent mutuellement.

3. Dispositif délivreur selon la revendication 1, caractérisé en ce que la variation de la largeur d'entrefer est obtenue par des dents (12, 23) et des entredents (13, 24) au bord périphérique de la branche (7", 25) s'étendant radialement vers l'extérieur de l'une des parties de carter.

4. Dispositif délivreur selon la revendication 1, caractérisé en ce que l'arbre de sortie (18) est associé à un tachymètre (43) qui règle l'alimentation en courant de l'aimant annulaire d'accouplement (10).

5. Dispositif délivreur selon la revendication 1, caractérisé en ce que le support (15) présente la forme d'un pot et est emboîté dans la partie rotative du carter (7) dont les caractéristiques géométriques sont similaires à celles dudit support, les deux éléments présentant, dans la zone de leur fond de pot (6, 16), la liaison axiale.

6. Dispositif délivreur selon la revendication 3, caractérisé en ce que les dents (12, 23) comportent, à leur extrémité libre, une partie repliée (7''', 25") dirigée vers les enroulements d'aimant annulaire (9, 26).

**Claims**

1. A delivery mechanism for running yarn, having a store body (28) which receives a number of turns of yarn as a stock to be drawn upon and to which the yarn is fed tangentially in the region of a frustoconical bevel (33) at controlled speed and from which the yarn is drawn off in the axial direction and with which is associated a device for the control of the yarn feed at any time only until a certain number of turns of yarn on the store body has been reached, the said control device comprising a scanner (44) influenced by the turns of yarn on the store body and an eddy-current brake mechanism which stops the feed of yarn, characterized in that

a constantly driven turned driving part (7) is provided which may be connected via an eddy-current clutch to a driven shaft (18) which through its rotation brings about the winding-in of the yarn, where the eddy-current clutch, via the current supply to which the control of the yarn speed is effected in dependence upon the r.p.m. of the driven shaft (18), and the eddy-current brake are designed in such a way that

a carrier (15) extending from the driven shaft (18) continues into two oppositely directed axially parallel rings (14, 19) which respectively penetrate into gaps (11) resp. (20) for the lines of magnetic field from a stationary annular clutch magnet (10) and a stationary annular brake magnet (22), where the gap (11) belonging to the eddy-current clutch is formed between a stationary part (8) of the housing and the edge (7''') of a rotary part (7") of the housing, which is connected permanently to the turned driving part (7), whilst the second gap (20) is formed between two stationary parts (21) and (25) of the housing.

2. A delivery mechanism as in Claim 1, characterized in that the rotary and the stationary parts (7, 8) of the housing have portions (7', 8") arranged to overlap one another.

3. A delivery mechanism as in Claim 1, characterized in that the variation in the width of gap is formed by teeth (12, 23) and tooth spaces (13, 24) at the peripheral edge of the radially outwards pointing arms (7", 25) of the one part of the housing.

4. A delivery mechanism as in Claim 1, characterized in that with the driven shaft (18) there is associated a tachometer (43) which controls the current supply to the annular clutch magnet (10).

5. A delivery mechanism as in Claim 1, characterized in that the carrier (15) is made pot-shaped and is nested into the rotating part (7) of the housing, which is made geometrically similar, and both parts have the shaft connection in the region of the bottom (6) resp. (16) of their pot.

6. A delivery mechanism as in Claim 3, characterized in that each tooth (12, 23) at the free end of it has a deflection (7''' resp. 25") pointing in the direction of the windings (9 resp. 26) of the annular magnets.

FIG.1

FIG.2

FIG.3

0 046 187